# EUROPÄISCHE PATENTSCHRIFT

(11) **EP 2 313 961 B1**
(45) Veröffentlichungstag und Bekanntmachung des Hinweises auf die Patenterteilung: **04.10.2017**
(21) Anmeldenummer: 09775976.5
(22) Anmeldetag: 17.07.2009
(51) Int. Cl.: H02K 23/04, H02K 23/66, H02K 11/00

(54) **GLEICHSTROM-KOMMUTATORMOTOR, INSBESONDERE FÜR EINE FAHRZEUGKOMPONENTENVERSTELLUNG**
DC COMMUTATOR MOTOR, IN PARTICULAR FOR A VEHICLE COMPONENT ADJUSTMENT
MOTEUR À COURANT CONTINU À COLLECTEUR, EN PARTICULIER POUR UN SYSTÈME DE RÉGLAGE D'ÉLÉMENT DE VÉHICULE

(30) Priorität: 19.07.2008 DE 102008033867; 19.07.2008 DE 102008033868
(43) Veröffentlichungstag der Anmeldung: 27.04.2011
(73) Patentinhaber: Faurecia Autositze GmbH, 31655 Stadthagen (DE)
(72) Erfinder: BETHGE, Thomas, 30974 Wennigsen (DE); GERDING, Rainer, 30419 Hannover (DE)
(74) Vertreter: Bremer, Ulrich
(86) Internationale Anmeldenummer: PCT/DE2009/000994
(87) Internationale Veröffentlichungsnummer: WO 2010/009705

(56) Entgegenhaltungen:
- EP-A- 1 487 090
- DE-A1- 4 438 868
- DE-A1-102006 015 920
- DE-A1-102006 030 721
- DE-A1-102008 021 071
- JP-A- 5 336 709

## Beschreibung

Die Erfindung betrifft ein Verstellsystem für ein Fahrzeug zur Verstellung einer Fahrzeugsitzkomponente oder als Teil eines Fensterhebers. Bei Elektromotoren zur Verstellung unterschiedlicher Komponenten im Fahrzeug ist es zum Teil vorgesehen, eine zuvor gespeicherte Position bzw. Ausgangsposition wieder aufzufinden. Hierzu gibt es zum einen Motoren mit Positionssensoren, z.B. einem Hallsensor oder einem Potentiometer, die direkt die jeweilige Position ermitteln. Weiterhin sind Elektromotoren mit Rippel-Counter-Technologie bekannt, bei denen die Position sensorlos ermittelt wird.

Bei Kommutatormotoren wird der Strom von der Stromversorgung bzw. der Steuereinrichtung über Bürsten zugeführt, die an dem in mehrere Lamellen unterteilten, zur Stromwendung dienenden Kommutator anliegen. Die Lamellen sind am Umfang des Kommutators gegeneinander isoliert und werden bei Drehung des aus den Ankerwicklungen, Motorwelle und Kommutator gebildeten Rotors entsprechend aufeinander folgend über die Bürsten bestromt. Hierbei gelangt jede Bürste von einer Lamelle aus nachfolgend auf den isolierten Zwischenbereich bzw. die Nut zwischen zwei Lamellen, wobei sie die beiden benachbarten Lamellen gleichzeitig kontaktiert und kurzschließt bzw. überbrückt, was zu einer Änderung im Stromsignal führt, das von der Steuereinrichtung ausgelesen wird. Somit erzeugen die vorzugsweise permanent erregten Elektromotoren im Betrieb entsprechend ihrer Lamellenanzahl am Kommutator Stromrippel, die von der Steuereinrichtung zur Positionserkennung genutzt werden können, ohne dass hierfür Sensoren mit der entsprechenden Verkabelung erforderlich sind.

Ein Ripple-Counter-Verfahren benötigt Stromrippel, die in Form und im zeitlichen Abstand ausreichend ausgeprägt sind, um für eine Steuereinheit sicher unterscheidbar und noch mit tolerierbaren Fehlern messbar zu sein.

Üblicherweise werden zweipolige Kommutatormotoren in Verbindung mit einem Ripple-Counter-Verfahren eingesetzt. Ein Nachteil zweipoliger Kommutatormotoren ist allerdings das ungünstige Verhältnis von Gewicht und Leistung.

Üblicherweise werden zweipolige Motoren mit einem Bürstenwinkel von 180° für ein Rippel-Counter-Verfahren eingesetzt. Bei Motoren mit einer geraden Anzahl von Nuten bzw. Lamellen- Zwischenräumen und somit auch einer geraden Anzahl von Lamellen ergibt sich dann eine Frequenz des Rippel-Stroms, die sich aus der Drehzahl des Motors multipliziert mit der Lamellenanzahl des Kommutator ergibt. Die DE 44 38 868 A1 beschreibt eine Kohlebürste für einen Gleichstrommotor, deren Lauffläche derart gestaltet ist, dass zwei definierte Auflageflächen zwischen der Kohlebürste und den kontaktierten Lamellen möglichst weit auseinander liegen.

Die JP 05 336709 A beschreibt einen mehrpoligen Kommutatormotor.

Die EP-A-1487 090 beschreibt eine Gleichstrom-Maschine mit kontinuierlich angeordneten magnetischen Polen, die einen magnetischen Fluss induzieren.

Die DE 10 2006 030721 A1 beschreibt einen Elektromotor mit Drehzahleinstellung, mit einer Anzahl von n Polen, wobei n gerade und grösser 2 ist, und eine Anzahl m von Bürsten, mit 2 kleiner/gleich m und m kleiner/gleich n, wobei zusätzliche Bürsten für eine Geschwindigkeitsstellung vorgesehen sind. Die Bürsten sind z.B. unter den Winkelverhältnissen 0°, 35°, 90°, oder 0°, 90°, 225° bei 14 Lamellen angeordnet, so dass die benachbarten Lamellen zu unterschiedlichen Zeitpunkten kurzschliessen. Der Erfindung liegt die Aufgabe zugrunde, eine Verstelleinrichtung mit einem Gleichstrom-Kommutatormotor zu schaffen, der eine sichere Auswertung im Rippel-Counter-Verfahren ermöglicht.

Diese Aufgabe wird durch eine Verstelleinrichtung nach Anspruch 1 gelöst. Die Unteransprüche beschreiben bevorzugte Weiterbildungen.

Der erfindungsgemäße Aufbau des Kommutatormotors als vierpoliger Motor ermöglicht hierbei eine hohe Leistung bei geringem Gewicht, insbesondere im Vergleich zu einem zweipoligen Motor.

Indem die beiden Bürsten derart ausgebildet sind, dass diese gleichzeitig zwei benachbarte Lamellen kurzschließen, wird erreicht, dass die Ausprägung der Stromrippel, insbesondere die "Amplitude" der Stromrippel, verbessert ist. Die "Amplitude" eines Stromrippels bestimmt sich dabei aus dem minimalen und maximalen Wert des Stroms innerhalb der Zeitperiode eines Stromrippels.

Erfindungsgemäß ist sowohl eine Lamellenanzahl möglich, die ein Vielfaches von vier ist, insbesondere acht, zwölf oder sechzehn, mit einem 90°-Bürstenwinkel, als auch eine hiervon abweichende geradzahlige Anzahl mit einem Bürstenwinkel-Versatz gegenüber 90°.

Bei der Ausbildung der Lamellenanzahl mit einem Vielfachen von vier kann durch die spezielle Anzahl (n) der Lamellen (n=4, 8, 12, ...) und die rechtwinklige Anordnung der Bürsten der Übergang zwischen den Lamellen und die hieraus resultierenden Stromrippel für beide Bürsten im Wesentlichen zum selben Zeitpunkt erzeugt werden, so dass sich die den jeweiligen Bürsten zugeordneten Stromrippel überlagern und die Rippelfrequenz bzw. Rippelzahl pro Umdrehung der Lamellenanzahl entspricht. Auf diese Weise kann mit sehr hoher Genauigkeit ein ausreichender Zeitabstand und eine ausreichende Trennung zwischen benachbarten Rippeln erreicht werden, was die Anwendung des Ripple-Counter-Verfahrens bzw. die sensorlose Messung ermöglicht.

Bei der hierzu alternativen Ausbildung des Bürstenwinkels der beiden Bürsten des vierpoligen Motors mit einem Versatz gegenüber der idealen Anordnung von 90° kann die Rippel-Anzahl verringert werden. Hierbei wird erkannt, dass bereits eine relativ geringe Änderung des Bürstenwinkels bzw. ein kleiner Winkelversatz gegenüber der 90°-Anordnung um einen Bruchteil eines Lamellenwinkels zu einer geometrischen Anordnung führen kann, bei der die beiden Bürsten jeweils gleichzeitig zwei benachbarte Lamellen kurzschließen bzw. über die Nut zwischen zwei Lamellen gelangen. Somit werden die Kurzschlusssignale und die hieraus resultierenden Stromrippel gleichzeitig erzeugt, so dass die Rippelfrequenz bzw. Rippelzahl pro Umdrehung deutlich verringert, insbesondere halbiert werden kann.

Somit kann insbesondere gegenüber der 90°- Anordnung ein Winkelversatz von einem Bruchteil des Lamellenwinkels (weniger als ein ganzer . Lamellenwinkel), z.B. der Hälfte eines Lamellenwinkels vorgenommen werden, wobei die Veränderung grundsätzlich zur Verkleinerung oder Vergrößerung des Bürstenwinkels genutzt werden kann. Hierbei wird erkannt, dass der relativ kleine Winkelversatz zu keiner nennenswerten Beeinflussung der Motoreigenschaften führt. Dies ergibt sich insbesondere bei einem vierpoligen Motor mit einer Lamellenanzahl oberhalb von 12, insbesondere einer Lamellenanzahl von 14, da hier der Winkelversatz eines halben Lamellenwinkels sehr gering ist.

Eine vorteilhafte Weiterbildung der Erfindung sieht vor, dass eine Anliegefläche einer Bürste, mit der die Bürste an einer Gegenfläche des Kommutators anliegt, mit einem Radius ausgebildet ist, der größer oder gleich einem Radius der Gegenfläche des Kommutators ist, vorzugsweise im Rahmen möglicher und für die bezweckte Anwendung angemessener Herstellungstoleranzen dem Radius der Gegenfläche entspricht. Dadurch, dass der Radius der Anliegefläche der Bürste größer oder gleich dem Radius der Gegenfläche ist, die durch den Kommutator ausgebildet wird, kann das Geräusch, das durch das Überfahren der isolierten Bereiche zwischen den Lamellen entsteht, reduziert werden. Entspricht für Bürste und Kommutator der Radius der Gegenfläche dem Radius der Anliegefläche, begünstigt dies das Kurzschließen benachbarter Lamellen durch die Bürsten und eine saubere Ausprägung der Stromrippel. Auch die zeitliche Übereinstimmung des Kurzschließens durch die beiden Bürsten kann auf diese Weise optimiert werden.

Hierbei kann der Radius der Anliegefläche der Bürste zunächst etwas größer als der Radius der Gegenfläche, d.h. des Kommutators ausgebildet werden, da erkannt wird, dass die Bürste sich einschleift.

Eine weitere vorteilhafte Weiterbildung der Erfindung sieht vor, dass der Kommutatormotor zusätzlich zumindest eine Bürstenführung für eine der Bürsten, vorzugsweise Bürstenführungen für beide Bürsten aufweist, die im Rahmen möglicher und für die bezweckte Anwendung angemessener Herstellungstoferanzen spielfrei ausgebildet ist. Die spielfreie Führung der Bürste bezweckt die Minimierung eines Verkippens der Bürste gegenüber dem Kommutator insbesondere während des Betriebs des Kommutatormotors und eine damit in der Regel verbundene Verkleinerung der Anliegefläche der Bürste an dem Kommutator. Durch das Verhindern eines Verkippens der Bürste bleibt die tatsächliche Anliegefläche der Bürste auch im Betrieb des Kommutatormotors weitestgehend erhalten. Des Weiteren wird durch diese Maßnahme das erwünschte identische Verhalten der Bürsten verbessert. Auf diese Weise lässt sich ebenfalls die Ausprägung der Stromrippel verbessern.

Erfindungsgemäss liegt jede Bürste somit entweder an einer Lamelle an, oder beide Bürsten gleichzeitig an zwei benachbarten Lamellen. Eine Bürstenüberdeckung einer Lamelle liegt unter 100%, z.B. bei 80%. Der Kommutatormotor ermöglicht hierbei einen Betrieb in beiden Richtungen, was insbesondere eine Verstellung einer Fahrzeugkomponente durch jeweilige Polung der Ansteuer-Spannung ermöglicht.

Der Kommutatormotor kann insbesondere ein Innenläufermotor sein, so dass sich ein kompakter Aufbau ergibt. Das Steuergerät ermöglicht eine sichere Detektion der Motorposition, sowie auch der Drehzahl. Die erfindungsgemäße Verstellsystem kann insbesondere zur Verstellung einer Sitzkomponente, z.B. zur Längsverstellung, Lehnenneigungsverstellung oder Höhenverstellung der Kopfstütze verwendet werden. Weiterhin sind auch Verwendungen z.B. als Fensterheber, Schiebedachverstellung und elektrische Lenksäule usw. möglich.

Die Erfindung wird im Folgenden anhand der beiliegenden Zeichnungen an einigen Ausführungsformen näher erläutert. Es zeigen:
- Fig. 1: einen Elektromotor für eine Sitzverstellung im Axialschnitt;
- Fig. 2: eine Ansicht auf den Kommutator des Elektromotors aus Fig. 1 gemäß einer Ausführungsform;
- Fig. 3: eine schematische Aufsicht auf eine in einer Bürstenführung geführten Bürste und auf einen Kommutator des Elektromotors;
- Fig. 4: ein Strom-Zeit-Diagramm des erfindungsgemäßen Elektromotors;
- Fig. 5: einen vergrößerte, schematische Darstellung eines einzelnen Stromrippels;
- Fig. 6: eine Ansicht auf den Kommutator des Elektromotors aus Fig. 1 gemäß einer weiteren Ausführungsform.

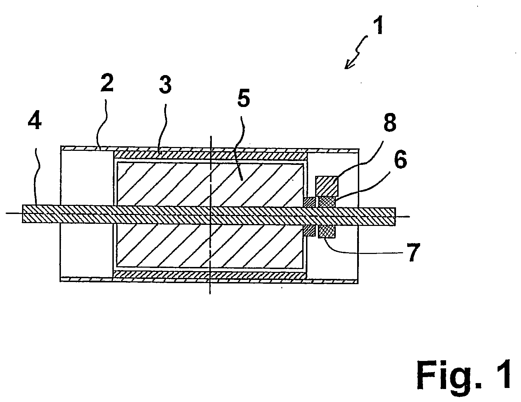

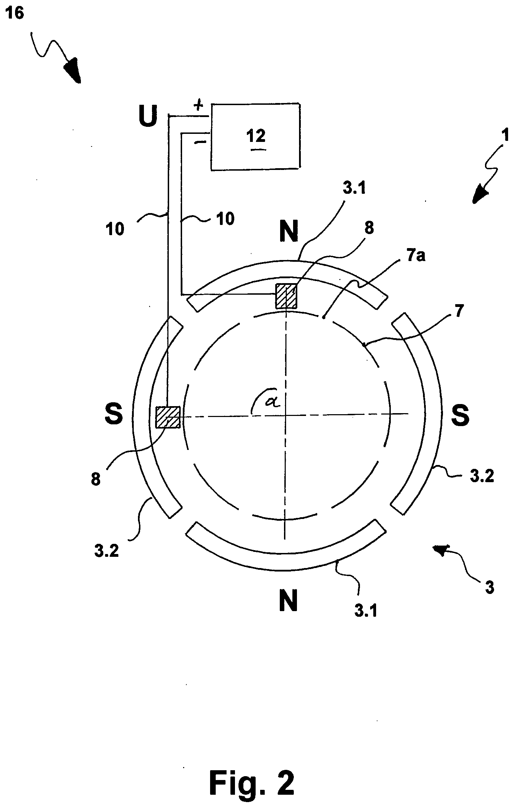

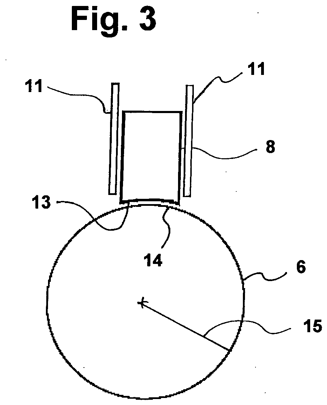

Ein Elektromotor 1 einer Motoranordnung 16 weist gemäß Fign. 1, 2 und 3 ein zylindrisches Gehäuse 2, einen als Stator dienenden Magnetsatz 3 sowie einen Rotor auf, der aus einer Welle 4, Ankerwicklungen 5 und einem Kommutator 6 gebildet wird. Der Magnetsatz 3 umfasst zwei Polpaare 3.1, 3.2, die vier permanent erregte Statorpole bilden. Somit liegt ein Innenläufermotor vor. An dem Kommutator 6 des vierpoligen Motors 1 sind gemäß Fig. 2 acht Lamellen 7 in Umfangsrichtung angeordnet. An den Lamellen 7 liegen unter einem Bürstenwinkel (α) von 90° angeordnet zwei Bürsten 8 an. An die beiden Bürsten 8 wird von einer Steuereinrichtung 12 über zwei Leitungen 10 eine Gleichspannung U, z.B. als PWM-Signal angelegt, so dass sich ein Strom I einstellt. Das Lamelle-Bürsten-System dient somit in bekannter Weise als mechanische Kommutierung des Kommutatormotors 1. Die Bürsten 8 werden in einer Bürstenführung 11 geführt, siehe Figur 3, und federnd gegen den Kommutator 6 gedrückt. Der Übersicht wegen sind in Figur 3 nur eine Bürste 8 und eine Bürstenführung 11 dargestellt.

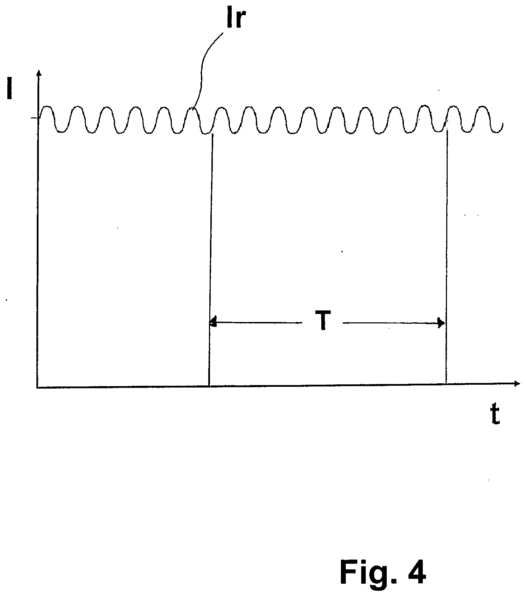

Die Lamellen 7 sind gleichmäßig über den Umfang des Kommutators 6 verteilt angeordnet, wobei die Bürsten 8 bei der Drehbewegung des Rotors 4, 5, 6 auf ihnen gleiten. Somit gelangt jede Bürste 8 periodisch auf eine Nut 7a bzw. isolierten Zwischenraum zwischen zwei Lamellen 7. Die Bürsten 8 sind mit einer Anliegefläche 13 ausgebildet, die sich über eine Nut 7a erstreckt, wodurch die Bürsten 8 benachbarte Lamellen 7 kurzzeitig kurzschließen. Der Übergang der Bürsten 8 zwischen benachbarten Lamellen 7 führt zur Ausbildung von Stromrippeln Ir. Figur 4 zeigt im Strom-Zeit-Diagramm die Stromstärke I in Abhängigkeit der Zeit t. Die Stromrippel Ir sind hierbei in Form und Größe schematisiert dargestellt. T gibt die Periode bzw. Umlaufzeit des Elektromotors 1 an. Dadurch, dass der Kommutator 6 acht Lamellen 7 aufweist und aufgrund der rechtwinkligen Anordnung der Bürsten 8 entspricht eine Umdrehung des Rotors 4, 5, 6 acht Rippeln im Strom-Zeit-Diagramm. Die von den Ankerwicklungen 5 erzeugten Stromrippel Ir werden von der Steuereinrichtung 12 gemessen und mittels eines an sich bekannten Ripple-Counter-Verfahrens ausgewertet. Hierdurch kann die Steuereinrichtung 12 die Position des Rotors 4, 5, 6 bestimmen, insbesondere ohne einen zusätzlichen Positionssensor wie z.B. Hall-Sensor oder ein Potentiometer zu verwenden. In diesem Ausführungsbeispiel mit acht Lamellen 7 zählt das Steuergerät 12 beispielsweise bei einer Drehzahl von z.B. 50 Umdrehungen pro Sekunde 400 Rippel pro Sekunde.

Alternativ kann ein anderes, ganzzahliges Vielfaches von vier als Anzahl für die Lamellen 7 gewählt werden, beispielsweise vier, zwölf, sechzehn, usw.. Die Wahl von acht Lammellen 7 erlaubt allerdings einen ausreichenden zeitlichen Abstand zwischen benachbarten Stromrippeln, was für eine sichere Unterscheidung benachbarter Rippel vorteilhaft ist, sowie einen ausreichenden Gleichlauf des Elektromotors 1. Besonders bevorzugt ist eine Ausbildung mit zwölf Lamellen.

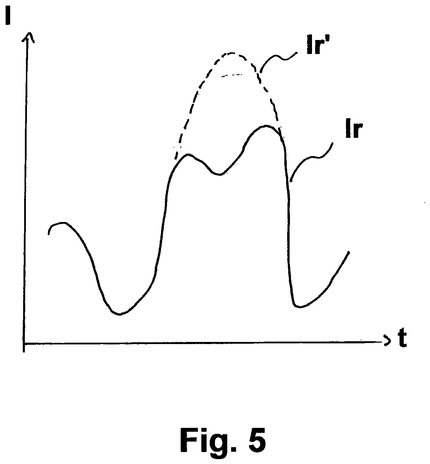

Figur 5 zeigt ein einzelnes Stromrippel Ir in einer vergrößerten Ansicht. Durch verschiedene sich überlagernde Effekte ist das Stromrippel Ir in der Regel nicht als ideales Stromrippel Ir'ausgebildet, sondern besitzt eine reduzierte "Amplitude" und kann insbesondere mehrere lokale Maxima und Minima aufweisen. Derartige Effekte erschweren die sichere Unterscheidung von benachbarten Stromrippeln.

Um eine ausreichende Ausprägung der Stromrippel Ir zu erreichen, sind die Bürsten 8 derart ausgebildet, dass diese gleichzeitig zwei benachbarte Lamellen kurzschließen. Des weiteren sind die Anliegeflächen 13 der Bürsten im Wesentlichen identisch in Form und Abmessungen ausgebildet und mit einem Radius ausgebildet, der dem Radius 15 einer Gegenfläche 14 des Kommutators 6, die durch Lamellen 7 und Nuten 7a gebildet wird, entspricht. Hierbei kann der Radius der Anliegeflächen 13 der Bürsten erfindungsgemäß entweder genau dem Radius 15, oder aber zunächst etwas größer als der Radius 15 der Gegenfläche 14 gewählt werden, z. B. am oberen Rand der Herstellungstoleranzen oder etwas oberhalb davon, da sich die Bürsten dann nachfolgend schnell entsprechend einschleifen. Die Anliegefläche 13 wird kleiner als die Gegenfläche 14 gewählt, kann z.B. bei 80% Bürstenüberdeckung liegen, so dass auch bei Verschleiss keine Überdeckung von drei Lamellen erfolgt und insbesondere hierdurch eine geeignete Rippelform erzeugt wird.

Die Bürstenführung 11 ist zur im Rahmen angemessener Herstellungstoferanzen möglichen spielfreien Führung einer Bürste 8 ausgebildet, um ein Verkippen der Bürste insbesondere während des Betriebs des Elektromotors 1 und damit einer Reduzierung der Anliegeflächen 13 entgegenzuwirken. Die Bürsten 8 können insbesondere in radialer Richtung an den Kommutator gedrückt werden.

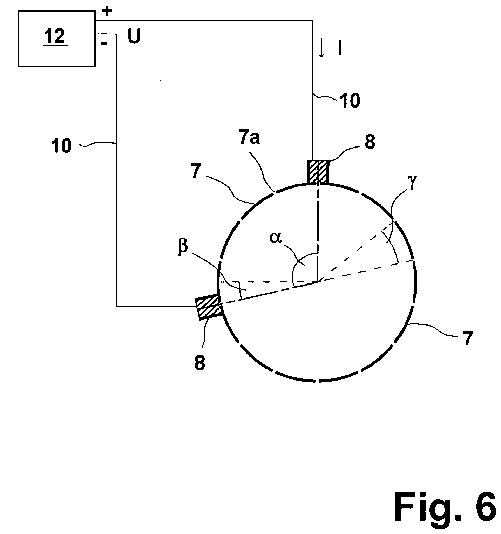

Bei der Ausführungsform der Fig. 6 sind vierzehn Lamellen 7 in Umfangsrichtung verteilt angeordnet, wobei auch hier zwei Bürsten 8 anliegen, d.h. bei ansonsten entsprechender Ausbildung wie in Fig. 2. Somit wird von der Steuereinrichtung 12 eine Gleichspannung U, z.B. als PWM-Signal angelegt wird. Die beiden Bürsten 8 sind bei diesem vierpoligen Motor am Kommutator 6 nicht gegenüberliegend bzw. mit einem Winkel von 180°, sondern im Wesentlichen rechtwinklig zueinander angeordnet.

Die Lamellen 7 sind auch hier gleichmäßig über den Umfang des Kommutators 6 verteilt angeordnet, wobei die Bürsten 8 bei der Drehbewegung des Rotors 4, 5, 6 auf ihnen gleiten. Hierbei gelangt jede Bürste 8 somit periodisch auf die Nut 7a bzw. Zwischenraum zwischen zwei Lamellen 7, wodurch sie die beiden benachbarten Lamellen 7 kurzschließt.

Bei der gezeigten Ausführungsform sind vierzehn Lamellen 7 an dem Kommutator 6 vorgesehen. Jede Lamelle 7 mit einer angrenzenden Nut 7a erstreckt sich somit über einen Lamellenwinkel γ von 360° : 14 = 25,71°.

Bei der Ausführungsform der Fig. 6 sind die beiden Bürsten 8 unter einem Bürstenwinkel a ≠ 90° zueinander angeordnet, d.h. es liegt ein Winkelversatz β = 90° - α ≠0 gegenüber dem rechten Winkel von 90° vor. Hierbei wird erkannt, dass zwar zunächst eine 90°-Anordnung von der Bestromung der Ankerwicklungen 5 her am effektivsten ist, ein kleiner Winkelversatz β jedoch die Motoreigenschaften nicht bzw. nicht relevant beeinflusst.

Der Winkelversatz β wird derartig gewählt, dass die beiden Bürsten 8 gleichzeitig jeweils zwei benachbarte Lamellen 7 kurzschließen. Somit entspricht der Winkelversatz β bei dieser Ausführungsform einem halben Lamellenwinkel γ, d.h. γ/2.

Da die beiden Bürsten 8 immer gleichzeitig zwei Lamellen 7 kurzschlie-ßen, ergibt sich hier ein Verhalten bzw. ein Strom-Zeit-Diagramm mit einer Anzahl von Stromrippeln Ir, wie sie bei einem vierpoligen Kommutatormotor mit einem Bürstenwinkel α = 90° und einer Lamellenanzahl n zu erwarten ist, die durch vier teilbar ist, oder auch wie bei einem zweipoligen Motor mit einem Bürstenwinkel von 180° und gerader Nutzahl.

Bei dem vierzehn-poligen Kommutatormotor 1 mit dem Lamellenwinkel γ =360° : 14 = 25,71° wird erfindungsgemäß somit der Bürstenwinkel α auf 4 x 25,71° = 102,9° erhöht, so dass wiederum jeweils zwei benachbarte Lamellen 7 gleichzeitig kurzgeschlossen werden und eine Impulszahl m mit m=14 Impulsen bzw. Stromrippeln Ir pro Umdrehung ergibt, die der Lamellenanzahl n entspricht.

Das Steuergerät 12 zählt somit bei einer Drehzahl von z.B. 3000 Umdrehungen pro Minute entsprechend 50 Umdrehungen pro Sekunde 700 Rippel pro Sekunde.

Alternativ zu der gezeigten Ausführungsform kann der Bürstenwinkel α auch auf 3 x 25,71 ° ≈ 77,14° gesetzt werden, d.h. ein halber Lammelenwinkel weniger als 90°. Die gezeigte Ausbildung mit α = 4 x 25,71° wird hier jedoch als vorteilhaft gewählt.

Bei einer Lamellenanzahl n=10 und somit γ =360°:10=36° kann der Bürstenwinkel α auf 3 x γ = 108° oder 2 x 8 = 72° gesetzt werden.

Somit ist das erfindungsgemäße System der Fig. 1 bis 5 entsprechend bzw. angepasst auch in Fig. 6 einsetzbar.

Die Motoranordnung ist z. B. Bestandteil eines Verstellsystems für ein Fahrzeug, hier eines Verstellsystems für die automatische Verstellung eines Fahrzeugsitzes. Das Verstellsystem ist u.a. durch eine geeignete Einrichtung der Steuereinheit 12 derart ausgebildet, dass es eine Position des Fahrzeugsitzes auf Anforderung speichern kann, und unter Verwendung des Ripple-Counter-Verfahrens auf eine weitere Anforderung in diese Stellung zurückkehrt.

Des Weiteren ist mittels der Steuereinheit 12 eine Drehzahlerfassung und Drehzahlregelung realisiert, die aus Rippelzahl pro Zeiteinheit die Drehzahl des Motors 1 ermittelt und über die Drehzahlregelung die Drehzahl einem gewünschten Wert anpasst. Eine derartige Regelung ist z. B.. für eine gleichmäßige Verstellung vorteilhaft.

Die erfindungsgemäße Motoranordnung eignet sich auch für andere Anwendungen, insbesondere im Fahrzeugbereich, speziell im Bereich der Fahrzeugsitze.

## Patentansprüche

1. Verstellsystem für ein Fahrzeug zur Verstellung einer FahrzeugsitzKomponente oder als Teil eines Fensterhebers,
wobei das Verstellsystem eine Motoranordnung (16) aufweist und an die Bordspannung des Fahrzeugs angeschlossen ist, wobei die Motoranordnung (16) aufweist:
einen Gleichstrom-Kommutatormotor zur Verstellung der Fahrzeugkomponente, wobei der Kommutatormotor (1) aufweist:
Ankerwicklungen (5), einen Kommutator (6) mit in Umfangsrichtung verteilt angeordneten Lamellen (7), zwei an den Lamellen (7) anliegenden Bürsten (8) zur Stromversorgung der Ankerwicklungen (5) und zum Aufnehmen von in den Ankerwicklungen (5) erzeugten Stromrippel-Signalen (Ir), eine Motorwelle (4), einen Magnetsatz (3) zur Ausbildung eines Magnetfeldes, wobei die Ankerwicklungen (5) und der Kommutator (6) auf der Motorwelle (4) als drehbarer Rotor angebracht sind, und
eine Steuereinrichtung (12) zur Beaufschlagung der beiden Bürsten (8) mit einer Gleichspannung (U) und zur Aufnahme und Auswertung der Stromrippel-Signale (Ir) durch ein Rippel-Counter-Verfahren zur Ermittlung einer Position des Kommutatormotors (1) und/oder zur Drehzahlerfassung und Drehzahlregelung,
**dadurch gekennzeichnet, dass** das Magnetfeld vierpolig ist,
eine Bürstenüberdeckung, mit der eine Bürste (8) mit ihrer Anliegefläche (13) an einer Lamelle (7) anliegt, unter 100 % liegt zum Verhindern einer verschleißbedingten Überdeckung von drei Lamellen (7), wobei jede Bürste (8) entweder an einer Lamelle (7) anliegt oder beide Bürsten (8) gleichzeitig an zwei benachbarten Lamellen (7) anliegen, so dass die beiden Bürsten (8) immer gleichzeitig zwei benachbarte Lamellen (7) kurzschließen,
wobei die Steuereinrichtung (12) bei der Ermittlung der Position des Elektromotors (1) eine Motorumdrehung aus einer Anzahl von Stromrippel-Signalen (Ir) ermittelt, wobei eine Rippelzahl pro Umdrehung der Lamellenanzahl (n) entspricht.

2. Verstellsystem nach Anspruch 1, **dadurch gekennzeichnet, dass** eine Lamellenanzahl (n) der Lamellen (7) des Kommutators (6) gleich einem ganzzahligen Vielfachen von vier, insbesondere acht oder zwölf ist, und die beiden Bürsten (8) unter einem Bürstenwinkel (α) von 90° zueinander auf dem Kommutator (6) angeordnet sind.

3. Verstellsystem nach Anspruch 1, **dadurch gekennzeichnet, dass** eine Lamellenanzahl (n) der Lamellen (7) des Kommutators (6) ungleich einem Vielfachen von vier, z. B. vierzehn ist,
die beiden Bürsten (8) unter einem Bürstenwinkel (α) zueinander auf dem Kommutator (6) angeordnet sind, der einen Winkelversatz (β) gegenüber 90° aufweist, und
der Bürstenwinkel (α) ein ganzzahliges Vielfaches eines Lamellenwinkels (γ) ist, der sich als Unterteilung des Umfangs des Kommutators (6) in die Lamellenanzahl (n) ergibt.

4. Verstellsystem nach Anspruch 3, **dadurch gekennzeichnet, dass** der Bürstenwinkel (α) gegenüber 90° um einen Teil des Lamellenwinkels (γ) verringert oder vergrößert ist.

5. Verstellsystem nach Anspruch 4, **dadurch gekennzeichnet, dass** bei einer geradzahligen Lamellenanzahl (n) der Bürstenwinkel (α) gegenüber 90° um die Hälfte des Lamellenwinkels (γ) verringert oder vergrößert ist.

6. Verstellsystem nach einem der vorherigen Ansprüche, **dadurch gekennzeichnet_{;} dass** eine Anliegefläche (13) zumindest einer der Bürsten (8), mit der die Bürste (8) an einer Gegenfläche (14) des Kommutators (6) anliegt, mit einem Radius ausgebildet ist, der größer oder gleich einem Radius (15) der Gegenfläche des Kommutators (6) ist, vorzugsweise dem Radius (15) der Gegenfläche entspricht.

7. Verstellsystem nach einem der vorherigen Ansprüche, **dadurch gekennzeichnet, dass** sie zumindest für eine der Bürsten (8) eine Bürstenführung (11) vorgesehen ist, in der die Bürste (8) geführt ist, wobei die Bürstenführung (11) spielfrei ausgebildet ist, zwecks Minimierung eines Verkippens der Bürste (8) gegenüber dem Kommutator (6) im Betrieb des Kommutatormotors.

8. Verstellsystem nach einem der vorherigen Ansprüche, **dadurch gekennzeichnet, dass** er in beide Richtungen drehbar ist, wobei die Drehrichtung durch die an die Bürsten (8) angelegte Spannung definiert ist.

9. Verstellsystem nach einem der vorherigen Ansprüche, **dadurch gekennzeichnet, dass** er ein Innenläufermotor ist, dessen aus den Ankerwicklungen (5), dem Kommutator (6) und der Motorwelle (4) gebildete Rotor innerhalb des Magnetsatzes (3) angeordnet ist.

## Claims

1. Adjustment system for a vehicle for adjusting a vehicle seat component or as part of a window winder, wherein the adjustment system comprises a motor arrangement (16) and is connected to the on-board voltage of the vehicle, wherein the motor arrangement (16) comprises:
a DC commutator motor for adjusting the vehicle component, wherein the commutator motor (1) comprises:
armature windings (5), a commutator (6) with segments (7) arranged distributed in the circumferential direction, two brushes (8) resting on the segments (7) for supplying current to the armature windings (5) and for receiving ripple current signals (Ir) generated in the armature windings (5), a motor shaft (4), a set of magnets (3) for producing a magnetic field, wherein the armature windings (5) and the commutator (6) are mounted as a rotatable rotor on the motor shaft (4), and
a control device (12) for supplying the two brushes (8) with a direct voltage ((U) and for receiving and evaluating the ripple current signals (Ir) by a ripple counter method for determining a position of the commutator motor and/or for registering and regulating the rotational speed,
**characterised in that** the magnetic field is a four-pole magnetic field, a brush coverage with which a brush (8) rests with its bearing surface (13) on a segment (7), is less than 100% in order to prevent a wear-produced coverage of three segments (7), wherein each brush (8) rests either on one segment (7) or both brushes (8) simultaneously lie on two adjacent segments (7), so that the two brushes (8) always simultaneously short-circuit two adjacent brushes (7), wherein the control device (12) when determining the position of the electric motor (1) determines a motor rotation from a number of ripple current signals (Ir), wherein a number of ripples per rotation corresponds to the number of segments (n).

2. Adjustment system according to Claim 1, **characterised in that** a number of segments (n) of the segments (7) of the commutator (6) is equal to an integral multiple of four, in particular eight or 12, and the two brushes (8) are arranged at a brush angle (α) of 90° with respect to one another on the commutator (6).

3. Adjustment system according to Claim 1, **characterised in that** a number of segments (n) of the segments (7) of the commutator (6) is not equal to a multiple of four, for example is 14, the two brushes (8) are arranged at a brush angle (α) with respect to one another on the commutator (6), which has an angular offset (β) with respect to 90°, and the brush angle (α) is an integral multiple of a segment angle (γ), which results from a subdivision of the circumference of the commutator (6) in the number of segments (n).

4. Adjustment system according to Claim 3, **characterised in that** the brush angle (α) with respect to 90° is reduced or increased by a part of the segment angle (γ).

5. Adjustment system according to Claim 4, **characterised in that** in the case of an even number of segments (n) the brush angle (α) with respect to 90° is reduced or increased by half the segment angle (γ).

6. Adjustment system according to any one of the preceding claims, **characterised in that** a bearing surface (13) of at least one of the brushes (8) with which the brush (8) rests on a counter surface (14) of the commutator (6) is formed having a radius that is larger or equal to a radius (15) of the counter surface of the commutator (6), and preferably corresponds to the radius (15) of the counter surface.

7. Adjustment system according to any one of the preceding claims, **characterised in that** for at least one of the brushes (8) a brush guide (11) is provided, in which the brush (8) is guided, wherein the brush guide (11) is formed without having any clearance in order to minimise a tilting of the brush (8) with respect to the commutator (6) during operation of the commutator motor.

8. Adjustment system according to any one of the preceding claims, **characterised in that** it is rotatable in both directions, wherein the direction of rotation is defined by the voltage applied to the brushes (8).

9. Adjustment system according to any one of the preceding claims, **characterised in that** it is an internal rotor motor, the rotor of which formed from the armature windings (5) the commutator (6) and the motor shaft (4) is arranged within the set of magnets (3).

## Revendications

1. Système d'ajustement pour un véhicule servant à ajuster un composant de siège de véhicule ou à former une partie d'un lève-vitres,
le système d'ajustement présentant un dispositif moteur (16) et étant raccordé à la tension de bord du véhicule, le dispositif moteur (16) présentant :
un moteur à collecteur à courant continu pour l'ajustement du composant de siège de véhicule, le moteur à collecteur (1) présentant :
des enroulements d'induit (5), un collecteur (6) équipé de lames (7) disposées de sorte qu'elles soient réparties dans le sens circonférentiel, deux balais (8) appliqués contre les lames (7) pour alimenter en courant les enroulements d'induit (5) et recevoir des signaux de ripples de courant (Ir) générés dans les enroulements d'induit (5), un arbre moteur (4), un ensemble magnétique (3) pour générer un champ magnétique, les enroulements d'induit (5) et le collecteur (6) étant disposés sur l'arbre moteur (4) en tant que rotor rotatif, et une unité de commande (12) pour alimenter les deux balais (8) en tension continue U et recevoir et exploiter les signaux de ripples de courant (Ir) par un procédé de comptage de ripples servant à déterminer une position du moteur à collecteur (1) et/ou déterminer et réguler la vitesse, **caractérisé en ce que** le champ magnétique est tétrapolaire, **en ce qu'**un recouvrement de balai, par l'intermédiaire duquel la surface de contact (13) d'un balai (8) est appliquée contre une lame (7), est inférieur à 100 % pour empêcher un recouvrement de trois lames (7) dû à l'usure, chaque balai (8) étant appliqué contre une lame (7) ou les deux balais (8) étant appliqués simultanément contre deux lames voisines (7), de sorte que les deux balais (8) mettent toujours simultanément en court-circuit deux lames voisines (7),
le dispositif de commande (12) déterminant un tour de moteur à partir d'un nombre de signaux de ripples de courant (Ir) lors de la détermination de la position du moteur électrique (1), un nombre de ripples par tour correspondant au nombre de lames (n).

2. Système d'ajustement suivant la revendication 1, **caractérisé en ce qu**'un nombre (n) de lames (7) du collecteur (6) est égal à un multiple entier de quatre, en particulier à huit ou douze, et en ce que les deux balais (8) sont disposés sur le collecteur (6) de sorte à enfermer entre eux un angle (α) de 90°.

3. Système d'ajustement suivant la revendication 1, **caractérisé en ce qu**'un nombre (n) de lames (7) du collecteur (6) n'est pas égal à un multiple de quatre, mais qu'il est, par exemple, égal à quatorze,
en ce que les deux balais (8) sont disposés sur le collecteur (6) de sorte à enfermer entre eux un angle (α) présentant un déport angulaire ((β) par rapport à 90°, et
en ce que l'angle (α) enfermé entre les balais est un multiple entier d'un angle formé entre les lames qui résulte de la division de la circonférence du collecteur (6) par le nombre de lames (n).

4. Système d'ajustement suivant la revendication 3, **caractérisé en ce que** l'angle (α) enfermé entre les balais est diminué ou agrandi, par rapport à 90°, d'une partie de l'angle formé entre les lames.

5. Système d'ajustement suivant la revendication 4, **caractérisé en ce qu**'un nombre de lames (n) pair, l'angle (α) enfermé entre les balais est diminué ou agrandi, par rapport à 90°, de la moitié de l'angle (γ) formé entre les lames.

6. Système d'ajustement suivant une des revendications précédentes, **caractérisé en ce qu**'une surface de contact (13) d'au moins un des balais (8), par l'intermédiaire de laquelle le balai (8) est appliqué à une surface antagoniste (14) du collecteur (6), est conçue avec un rayon qui est supérieur ou égal à un rayon (15) de la surface antagoniste du collecteur (6) et correspond de préférence au rayon (15) de la surface antagoniste.

7. Système d'ajustement suivant une des revendications précédentes, **caractérisé en ce qu**'est prévu pour au moins un des balais (8) un dispositif de guidage de balai (11), dans lequel le balai (8) est guidé, le dispositif de guidage (11) étant conçu sans jeu, afin de minimiser un basculement du balai (8) par rapport au collecteur (6) lorsque le moteur à collecteur est en service.

8. Système d'ajustement suivant une des revendications précédentes, **caractérisé en ce qu'il** peut tourner dans les deux sens, le sens de rotation étant défini par la tension appliquée aux balais (8).

9. Système d'ajustement suivant une des revendications précédentes, **caractérisé en ce qu**'il est un moteur avec un rotor interne, dont le rotor formé par les enroulements d'induit (5), le collecteur (6) et l'arbre moteur (4) est disposé à l'intérieur de l'ensemble magnétique (3).
